# EUROPÄISCHE PATENTSCHRIFT

(11) **EP 0 527 151 B1**
(45) Veröffentlichungstag und Bekanntmachung des Hinweises auf die Patenterteilung: **22.06.1994**
(21) Anmeldenummer: 91907910.3
(22) Anmeldetag: 25.04.1991
(51) Int. Cl.: B23K 26/00, A61B 17/00, G02B 6/42

(54) **VORRICHTUNG ZUM ÜBERTRAGEN VON LASERLICHT**
LASER-LIGHT TRANSMISSION DEVICE
DISPOSITIF POUR LA TRANSMISSION DE LUMIERE LASER

(30) Priorität: 30.04.1990 DE 9004934 U
(43) Veröffentlichungstag der Anmeldung: 17.02.1993
(73) Patentinhaber: Rofin Sinar Laser GmbH, 22113 Hamburg (DE)
(72) Erfinder: WALKER, Richard, Ann Arbor, MI 48104 (US); LUDEWIGT, Klaus, D-2000 Oststeinbek (DE)
(74) Vertreter: Fuchs, Franz-Josef, Dr.-Ing.
(86) Internationale Anmeldenummer: DE9100352
(87) Internationale Veröffentlichungsnummer: WO9117015

(56) Entgegenhaltungen:
- EP-A- 0 194 856
- EP-A- 0 331 891
- DE-A- 3 143 422
- US-A- 4 844 574
- Patent Abstracts of Japan, Band 9, Nr. 140 (E-321)(1863), 14. Juni 1985 & JP-A-6022385 (MATSUSHITA) 4 February 1985

## Beschreibung

Die Erfindung betrifft ein System zum Übertragen und Kontrollieren von Laserlicht, sowie ein Verfahren zur optischen Überwachung der Übertragungsstrecke eines Laserstrahles.

Laserlicht wird häufig mit Lichtleitern übertragen. Dies trifft auch für Laserlicht hoher Intensität zu, mit dem zum Beispiel eine mechanische Bearbeitung von Werkstücken erfolgen soll.

Die Verwendung von Lichtleitern oder Faseroptiken ermöglicht es, daß Nd:YAG-Laser oder andere Laser, zum Beispiel CO₂-Laser, leicht in Produktionssysteme integriert werden können, wobei man trotzdem einen hohen Grad von Freiheit und Flexibilität hat. Die Freiheit und Flexibilität sind dabei sehr viel größer als bei konventionellen festen oder starren optischen Systemen mit Spiegeln und Linsen. Man kann mit Hilfe der Faseroptiken auch in sehr enge Räume und beengte Stellen gelangen, so daß man dreidimensionelle Teile verhältnismäßig einfach und kostengünstig bearbeiten kann.

Wenn man jedoch Faseroptiken zum Übertragen von Laserenergie hoher Leistung verwendet, so ergeben sich verschiedene Sicherheitsrisiken, die bei den feststehenden optischen Einreichungen nicht auftreten. So können große Probleme auftreten, wenn die Faser bricht oder zum Beispiel so stark gebogen wird, daß keine Totalreflexion mehr stattfindet. Die Laserenergie kann dann an andere Stellen gelangen und hier zu Zerstörungen und/oder Verletzungen führen.

Es sind verschiedene Verfahren und Einrichtungen bekannt, um dieses Problem zu lösen und um zu verhindern, daß Menschen oder Material der Laserstrahlung des Nd:YAG-Lasers, CO₂-Lasers oder irgend eines anderen Lasers ausgesetzt ist. Bei diesen Einrichtungen ist normalerweise am Ende der Lichtfaser bei oder nahe der Fokussiereinrichtung ein Detektor für die Hauptwellenlänge oder eine sekundäre Wellenlänge der Laserstrahlung vorgesehen. Trifft hier keine Laserstrahlung mehr ein, so wird der Laserstrahl automatisch unterbrochen. Einrichtungen dieser Art haben jedoch folgende Nachteile:

Bei gepulstem Laserbetrieb wird wenigstens ein Lichtpuls in den Lichtleiter eintreten, bevor festgestellt wird, daß eine Störung vorliegt, zum Beispiel ein Bruch des Lichtleiters. Durch den Detektor wird der Platzbedarf in der Umgebung der Fokussiereinrichtung erhöht, was natürlich die Zugangsmöglichkeit mit dem Laser beim Bearbeiten in engen Räumen oder an engen Stelle begrenzt. Fehlt die Fokussieroptik, oder ist sie nicht richtig eingebaut, so wird dies ebenfalls nicht detektiert.

Aus der DE-A-31 43 422 ist Überwachungsvorrichtung für Laserstrahl-Leiteinrichtungen bekannt, bei der das Auftreten von Übertemperaturzuständen am Ausgang von Faseroptiken optisch überwacht wird. Hierzu ist in einem Ausführungsbeispiel eine separate Lichtquelle, beispielsweise ein Helium-Neon-Laser, vorgesehen, mit der die Reflektivität einer gegenüber dem Ende einer Lichtleitfaser angeordneten optischen Komponente überwacht wird. Eine Übertemperatur innerhalb der zu überwachenden Faser führt dabei zu einer Verdampfung von Fasermaterial, das sich auf der dem Ende der Faser gegenüberliegenden Oberfläche niederschlägt und deren Reflektivität vermindert. Mit dieser Einrichtung kann jedoch eine zu Leckagelicht führende Beschädigung der Faser nicht überwacht werden.

Aus der Europäischen Patentanmeldung 0 331 891 ist eine Einrichtung zum Steuern eines mit einem Laser durchgeführten Bondvorganges offenbart, bei dem dem zum Bonden verwendeten Laserstrahl ein zweiter Laserstrahl überlagert ist, mit dem die Reflektivität des Bonddrahtes während des Bondvorganges erfaßt wird. Auch mit dieser Einrichtung ist eine Überwachung der Übertragungsstrecke nicht möglich, da eine Änderung der Intensität des reflektierten zweiten Strahles durch die Oberflächenbeschaffenheit des Werkstücks bestimmt ist.

Die Aufgabe der Erfindung besteht in der Schaffung eines Systems, das hohe Sicherheit mit großer Flexibilität verknüpft. Außerdem soll ein Verfahren mit diesen Eigenschaften angegeben werden.

Diese Aufgabe wird durch ein System gemäß Anspruch 1 und ein Verfahren gemäß Anspruch 13 gelöst.

Über die Übertragungsstrecke, über die das Laserlicht übertragen wird, wird also nicht nur der Laserstrahl des ersten Lasers, mit dem zum Beispiel eine Werkstückbearbeitung erfolgen soll, gesandt; über den gleichen optischen Weg wird auch der Strahl des Zusatzlasers übertragen, der nur verhältnismäßig kleine Leistung haben muß, um seinen Zweck zu erfüllen. Dieser Zusatzlaserstrahl gelangt durch die gleichen optischen Elemente wie der Hauptlaserstrahl hindurch, wird aber im Gegensatz zum Hauptlaserstrahl von der Fokussieroptik reflektiert und wird dann bis zum Laserkopf zurückgeleitet, wo er seitlich abgelenkt wird und in den Detektor fällt. Bei Normalbetrieb wird vom Detektor immer Licht des Zusatzlasers empfangen. Wird nun die optische Übertragungsstrecke unterbrochen, so gelangt kein Licht des Zusatzlasers mehr auf den Detektor. In diesem Falle wird sofort der Laserstrahl des ersten Lasers unterbrochen. Zweckmäßigerweise geschieht dies durch einen Verschluß, wie z.B. eine Verschlußblende oder dergleichen. Es wäre an sich auch denkbar, die elektrische Zuleitung zum ersten Laser zu unterbrechen, was aber nicht zweckmäßig ist, wenn nur einer von mehreren Lichtwegen, die vom selben Laser gleichzeitig bedient werden, unterbrochen ist. Der Zusatzlaser sollte dabei eine so geringe Leistung aufweisen, daß keine irgendwie gearteten Schädigungen von Mensch oder Material auftreten können, wenn die optische Übertragungsstrecke zum Beispiel durch Bruch des Lichtleiters unterbrochen wird und der Laserstrahl an einen unerwünschten Ort gelangt.

Das erfindungsgemäße System kann auch bei Übertragungswegen ohne Lichtleiter verwendet werden, obwohl es für Übertragungswege mit Lichtleiter besonders vorteilhaft ist.

Mit Hilfe der erfindungsgemäßen Systeme können folgende Fehler festgestellt werden:
- Die Kopplungsoptik für den Lichtleiter ist nicht am Laserkopf angebracht oder falsch justiert;
- der Lichtleiter - sofern vorhanden - ist nicht an die Kopplungsoptik angeschlossen;
- der Lichtleiter ist gebrochen oder hat einen zu kleinen Krümmungsradius, was zu übermäßigen Verlusten führt;
- die Fokussiereinrichtung ist nicht am Ende des Lichtleiters angebracht;
- die Fokussieroptik ist nicht in die Fokussiereinheit eingesetzt.

Zweckmäßigerweise haben beide Laser einen gemeinsamen Laserkopf, in dem ein ablenkendes optisches Element für den Zurückreflektierten Strahl des Zusatzlasers sowie der Detektor angeordnet sind. Auf diese Weise kann der Lichtweg des Lasers bis zurück in den Laserkopf überwacht werden.

Zweckmäßigerweise ist das ablenkende optische Element eine schräg angeordnete Platte, die das Licht des ersten Lasers durchläßt und dasjenige des Zusatzlasers reflektiert.

Es ist auch möglich, als Zusatzlaser ebenfalls einen gepulsten Laser zu verwenden; dieser würde seinen Puls jeweils kurz vor einem Puls des Hauptlasers abgeben, so daß die einwandfreie Beschaffenheit der optischen Übertragungsstrecke kurz vor jedem Puls des Haupt- oder Leistungslasers überprüft werden kann. Eine dauernde Überprüfung ist aber möglich, wenn der Zusatzlaser ein Dauerstrichlaser ist.

Der Hauptlaser wird normalerweise im Infrarotbereich arbeiten, wenn damit eine Werkstückbearbeitung durchgeführt werden soll. In diesem Falle ist es ganz besonders zweckmäßig, wenn der Zusatzlaser sichtbares Licht, insbesondere rotes Licht, aussendet. In diesem Falle ist es einerseits relativ einfach, eine Beschichtung zu finden, die das Infrarotlicht durchläßt, das rote Licht aber reflektiert. Andererseits wird, wenn die Reflektion nicht vollständig ist, immer ein wenig Licht des Zusatzlasers bis zur Bearbeitungsstelle gelangen und hier einen sichtbaren Lichtfleck erzeugen, mit dem die Einjustierung möglich ist, bevor der Leistungslaser angeschaltet wird.

Wie bereits erwähnt, ist das System zweckmäßigerweise bei Fällen anzuwenden, in denen die Laserenergie mit einem Lichtleiter von einem Punkt zum anderen geleitet wird. Es können im Prinzip aber auch andere optische Systeme überprüft und gesichert werden, die lediglich Spiegel und Linsen aufweisen.

Zweckmäßigerweise sind alle optischen Elemente mit Antireflexbeschichtungen für das Licht des ersten Lasers versehen, da schon kleine Bruchteile reflektierten Licht es wegen der hohen Leistungsdichten sehr schädlich Wirkungen hervorrufen können. Ebenso werden zweckmäßigerweise die optischen Elemente auch mit einer Antireflexbeschichtung für das Licht des Zusatzlasers versehen sein, was aber natürlich nicht für die Fläche der Fokussieroptik zutrifft, die mit der Beschichtung versehen ist, die das Licht des Zusatzlasers reflektiert.

Der Zusatzlaser sollte nur wenig Energie abstrahlen, um hier Gefahr von Beschädigungen und Verletzungen zu vermeiden. Besonders zweckmäßig ist hier eine Laserdiode.

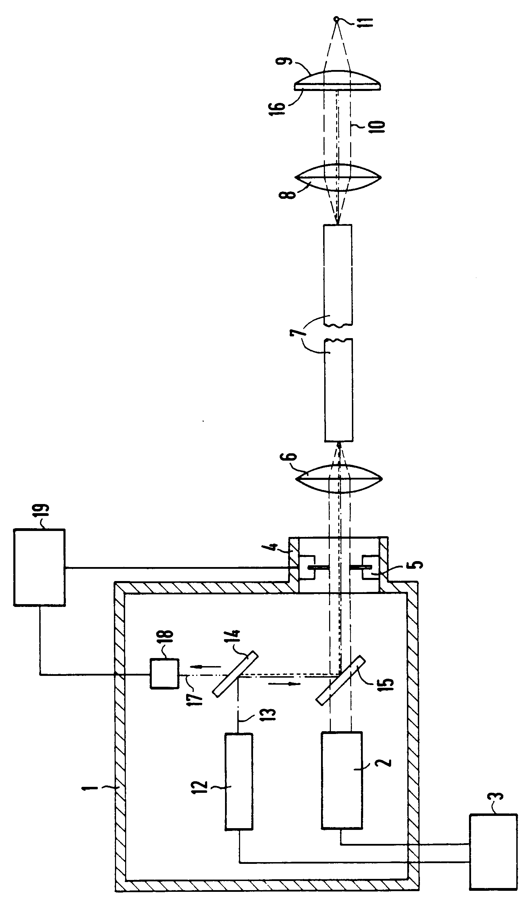

Die Erfindung wird im folgenden anhand einer vorteilhaften Ausführungsform unter Bezugnahme auf die beigefügte Zeichnung beschrieben.

In einem Gehäuse 1 ist ein Leistungslaser 2 angeordnet, der von einer Stromquelle 3 gespeist wird. Der Laserstrahl wird durch den Laserkopf 4, der mit einer Verschlußblende 5 versehen ist, zu einer Kopplungsoptik 6 geleitet, die den Laserstrahl in einen Lichtleiter 7 leitet. Am Austrittsende des Lichtleiters sind eine Kcllimieroptik 8 und eine Fokussieroptik 9 vorgesehen, die den gestrichelt gezeichneten Laser-Strahl 10 des Leistungslasers 2 in einem Punkt 11 fokussiert, in dem eine Werkstückbearbeitung stattfinden soll.

Im Gehäuse 1 ist noch ein Zusatzlaser 12 geringer Leistung, der kontinuierlich betrieben wird, insbesondere eine Laserdiode, angeordnet. Das strichpunktiert dargestellte Licht 13 des Zusatzlasers 12 fällt auf eine halbdurchlässige Platte 14 und wird nach unten auf eine schräg angeordnete Platte 15 (Ablenkspiegel) geleitet, die vor dem ersten Laser 2 angeordnet ist. Durch diese Platte 15, die für das Licht des Lasers 2 durchlässig ist und für das Licht des Lasers 12 reflektierend ist, wird das Licht 13 auf denselben Weg wie der Lichtstrahl 10 des Hauptlasers 2 geschickt. Die Fokussieroptik 9 ist mit einer Beschichten 16 versehen, die zwar für das Laserlicht 10 des Hauptlasers 2 durchlässig ist, die das Licht 13 des Zusatzlasers 12 aber reflektiert, so daß das Licht 13 auf demselben Weg zurückgeschickt wird, auf dem es gekommen ist. Das in den Laserkopf 4 zurückreflektierte Licht des Zusatzlasers 12 ist in der Figur gepunktet dargestellt und mit dem Bezugszeichen 17 versehen. Dieses Licht 17 wird von der Platte 15 reflektiert und gelangt über die Platte 14 in den Sensor oder Detektor 18. Wenn die am Detektor 18 gemessene Intensität des ausgekoppelten Strahles 17 einen vorgegebenen Sollwert unterschreitet, wird über eine Schaltung 19 elektrisch die operativ damit verbundene Verschlußblende 5 geschlossen, so daß kein Licht des Lasers 2 mehr nach außen dringen kann.

Alle optischen Elemente (wie reflektierende Platten, Linsen und Endflächen des Lichtleiters) 7 sind mit Beschichtungen versehen, die Reflexionen des Lichtes 10 des ersten Lasers 2 verhindern oder zumindestens minimieren. Diese Beschichtungen sind in der Figur nicht gezeigt.

Bei einem gepulsten Leistungslaser 2 erfolgt die Messung der Intensität des und aus der Übertragungsstrecke des ersten Strahles 10 ausgekoppelten und auf den Detektor 18 auftreffenden reflektierten Strahles 17 vorzugsweise während einer Pulspause dieses Leistungslasers 2. Dadurch werden Störungen des vom Detektor 18 weitergegebenen Meßsignals durch den Hochleistungspuls des Leistungslasers 2 vermieden.

Die Beschichtung 16 kann anstelle auf der Fokussieroptik 9 auch auf einem anderen optischen Element angeordnet sein, das sich im Endbereich des Strahlenganges des Laserstrahles 10 befindet und für diesen Strahl 10 optisch durchlässig ist, beispielsweise auf einer (nicht gezeigten) planparallelen Platte.

## Patentansprüche

1. System zum Übertragen und Kontrollieren von Laserlicht mit
a) einem ersten Laser (2) zur Emission eines ersten Strahles (10) in eine Übertragungsstrecke,
b) Mitteln (12) zum Erzeugen eines zweiten Strahles (13), dessen Wellenlänge von der Wellenlänge des ersten Strahles (10) verschieden ist,
c) Mitteln (14, 15) zum Einkoppeln des zweiten Strahles (13) in die Übertragungsstrecke des ersten Strahles (10) derart, daß sich der erste und der zweite Strahl (10, 13) in Aus-Ausbreitungsrichtung überlagern,
d) in der Übertragungsstrecke angeordneten Mitteln (16) zur wellenlängenselektiven Reflexion des zweiten Strahles (13),
e) Mitteln (15) zum Auskoppeln des reflektierten zweiten Strahles (17) aus der Übertragungsstrecke,
f) einem Detektor (18) für den reflektierten zweiten Strahl (17) sowie
g) einer Unterbrechungseinrichtung (5) zur Unterbrechung des ersten Strahles (10), die an den Detektor (18) operativ angeschlossen ist.

2. System nach Anspruch 1, **dadurch gekennzeichnet**, daß in der Übertragungsstrecke eine Oberfläche, insbesondere eine Oberfläche der Fokussieroptik (9), mit einer den zweiten Strahl (13) reflektierenden Beschichtung (16) versehen ist.

3. System nach Anspruch 1 oder 2, **dadurch gekennzeichnet**, daß zum Erzeugen des zweiten Strahles (13) ein Zusatzlaser (12) vorgesehen ist.

4. System nach einem der vorhergehenden Ansprüche, **dadurch gekennzeichnet**, daß in der Übergangsstrecke Linsen (6, 8, 9) angeordnet sind, die mit Antireflexionsschichten für den ersten Strahl (10) versehen sind.

5. System nach einem der vorhergehenden Ansprüche, **dadurch gekennzeichnet**, daß das ablenkende optische Element (15) eine schräg angeordnete Platte ist, die das Licht (10) des ersten Lasers durchläßt und dasjenige des Zusatzlasers (12) reflektiert.

6. System nach einem der Ansprüche 3 bis 5, **dadurch gekennzeichnet**, daß der Zusatzlaser (12) ein Dauerstrichlaser ist.

7. System nach einem der vorhergehenden Ansprüche, **dadurch gekennzeichnet**, daß der Zusatzlaser (12) sichtbares Licht, insbesondere rotes Licht, aussendet.

8. System nach einem der vorhergehenden Ansprüche, **dadurch gekennzeichnet**, daß es einen Lichtleiter (7) aufweist.

9. System nach einem der vorhergehenden Ansprüche, **dadurch gekennzeichnet**, daß alle optischen Elemente (6, 7, 8, 9, 15) mit Antireflexbeschichtungen für das Licht (10) des ersten Lasers (2) versehen sind.

10. System nach einem der vorhergehenden Ansprüche, **dadurch gekennzeichnet**, daß zumindest einige optische Elemente (6, 7, 8) - mit Ausnahme der mit der reflektierenden Beschichtung (16) versehenen Oberfläche - mit einer Antireflexbeschichtung für das Licht (13) des Zusatzlasers (12) versehen sind.

11. System nach einem der vorhergehenden Ansprüche, **dadurch gekennzeichnet**, daß die Unterbrechungseinrichtung (5) ein Verschluß, insbesondere eine elektrisch betätigbare Verschlußblende, ist.

12. System nach einem der vorhergehenden Ansprüche, **dadurch gekennzeichnet**, daß der Zusatzlaser (12) eine Laserdiode ist.

13. Verfahren zur optischen Überwachung der Übertragungsstrecke eines von einem ersten Laser (2) emittierten ersten Strahles (10) mit folgenden Merkmalen:
a) in die Übertragungsstrecke des ersten Strahles (10) wird ein zweiter Strahl (13) derart eingekoppelt, daß sich der erste und der zweite Strahl (10, 13) in Ausbreitungsrich- tung überlagern,
b) die Wellenlänge des zweiten Strahls (13) ist von der Wellenlänge des ersten Strahles (10) verschieden,
c) der zweite Strahl (13) wird am Ende der Übertragungsstrecke wellenlängenselektiv reflektiert,
d) der reflektierte Strahl (17) wird aus der Übertragungsstrecke ausgekoppelt,
e) die Intensität des ausgekoppelten Strahles (17) wird gemessen, und
f) in Abhängigkeit vom Ergebnis dieser Messung wird die Übertragungsstrecke für den ersten Strahl (10) freigegeben oder unterbrochen.

14. Verfahren nach Anspruch 13, **dadurch gekennzeichnet**, daß bei einem gepulsten ersten Strahl (10) die Intensität des ausgekoppelten Strahles (17) während einer Pause zwischen zwei aufeinanderfolgenden Pulsen des ersten Strahles (10) gemessen wird.

## Claims

1. System for transmitting and controlling laser light having
a) a first laser (2) for the emission of a first beam (10) into a transmission path;
b) means (12) for generating a second beam (13), the wavelength of which differs from the wavelength of the first beam (10);
c) means (14, 15) for coupling the second beam (13) into the transmission path of the first beam (10) in such a way that the first and the second beam (10, 13) are superimposed in the direction of propagation;
d) means (16) arranged in the transmission path for wavelength-selective reflection of the second beam (13);
e) means (15) for decoupling the reflected second beam (17) from the transmission path;
f) a detector (18) for the reflected second beam (17) and also
g) an interrupter (5) for interrupting the first beam (10), which interrupter is operatively connected to the detector (18).

2. System according to claim 1, characterised in that in the transmission path a surface, in particular a surface of the focusing optical system (9), is provided with a coating (16) which reflects the second beam (13).

3. System according to claim 1 or 2, characterised in that an additional laser (12) is provided for the purpose of generating the second beam (13).

4. System according to one of the preceding claims, characterised in that arranged in the transition path there are lenses (6, 8, 9) which are provided with anti-reflective layers for the first beam (10).

5. System according to one of the preceding claims, characterised in that the deflecting optical element (15) is an obliquely arranged plate which lets through the light (10) of the first laser and reflects that of the additional laser (12).

6. System according to one of the claims 3 to 5, characterised in that the additional laser (12) is a continuous wave laser.

7. System according to one of the preceding claims, characterised in that the additional laser (12) emits visible light, in particular red light.

8. System according to one of the preceding claims, characterised in that it has a light guide (7).

9. System according to one of the preceding claims, characterised in that all the optical elements (6, 7, 8, 9, 15) are provided with anti-reflective coatings for the light (10) of the first laser (2).

10. System according to one of the preceding claims, characterised in that at least some of the optical elements (6, 7, 8) - with the exception of the surface provided with the reflective coating (16) - are provided with an anti-reflective coating for the light (13) of the additional laser (12).

11. System according to one of the preceding claims, characterised in that the interrupter (5) is a shutter, in particular an electrically operable shutter diaphragm.

12. System according to one of the preceding claims, characterised in that the additional laser (12) is a laser diode.

13. Method for optically monitoring the transmission path of a first beam (10) emitted by a first laser (2) having the following features:
a) a second beam (13) is coupled into the transmission path of the first beam (10) in such a way that the first and the second beam (10, 13) are superimposed in the direction of propagation;
b) the wavelength of the second beam (13) differs from the wavelength of the first beam (10);
c) the second beam (13) is reflected at the end of the transmission path in a wavelength-selective manner;
d) the reflected beam (17) is decoupled from the transmission path;
e) the intensity of the decoupled beam (17) is measured; and
f) the transmission path for the first beam (10) is freed or interrupted as a function of the result of this measurement.

14. Method according to claim 13, characterised in that in the case of a pulsed first beam (10) the intensity of the decoupled beam (17) is measured during an interval between two successive pulses of the first beam (10).

## Revendications

1. Système pour transmettre et contrôler une lumière laser, comportant
a) un premier laser (2) servant a émettre un premier faisceau (10) dans une section de transmission,
b) des moyens (12) pour produire un second faisceau (13), dont la longueur d'onde diffère de la longueur d'onde du premier faisceau (10),
c) des moyens (14, 15) pour injecter le second faisceau (13) dans la section de transmission du premier faisceau (10) de telle sorte que les premier et second faisceaux (10, 13) se superposent dans la direction de propagation, des moyens (16) disposés dans la section de transmission pour réaliser la réflexion, sélective du point de vue des longueurs d'onde, du second faisceau (13),
e) des moyens (15) pour découpler le second faisceau réfléchi (17) à partir de la section de transmission,
f) un détecteur (18) pour le second faisceau réfléchi (17), et
g) un dispositif d'interruption (5) pour l'interruption du premier faisceau (10), qui est raccordé de façon opérationnelle au détecteur (18).

2. Système suivant la revendication 1, caractérisé par le fait que dans la section de transmission, une surface, notamment une surface du dispositif optique de focalisation (9), est pourvue d'un revêtement (16) qui réfléchit le second faisceau (13).

3. Système suivant la revendication 1 ou 2, caractérisé par le fait qu'un laser supplémentaire (12) est prévu pour produire le second faisceau (13).

4. Système suivant l'une des revendications précédentes, caractérisé par le fait que dans la section de jonction sont disposées des lentilles (6, 8, 9) qui comportent des couches antireflet pour le premier faisceau (10).

5. Système suivant l'une des revendications précédentes, caractérisé par le fait que l'élément optique déviateur (15) est une plaque disposée obliquement, qui transmet la lumière (10) du premier laser et réfléchit celle du laser supplémentaire (12).

6. Système suivant l'une des revendications 3 à 5, caractérisé par le fait que le laser supplémentaire (12) est un laser fonctionnant en continu.

7. Système suivant l'une des revendications précédentes, caractérisé par le fait que le laser supplémentaire (12) émet une lumière visible, notamment une lumière rouge.

8. Système suivant l'une des revendications précédentes, caractérisé par le fait qu'il possède un guide de lumière (7).

9. Système suivant l'une des revendications précédentes, caractérisé par le fait que tous les éléments optiques (6, 7, 8, 9, 15) sont pourvus de revêtements antireflet pour la lumière (10) du premier laser (2).

10. Système suivant l'une des revendications précédentes, caractérisé par le fait qu'au moins quelques éléments optiques (6,7,8) - à l'exception de la surface recouverte par le revêtement réfléchissant (16) - sont pourvus d'un revêtement antireflet pour la lumière (13) du laser supplémentaire (12).

11. Système suivant l'une des revendications précédentes, caractérisé par le fait que le dispositif d'interruption (5) est un dispositif de fermeture, notamment un diaphragme de fermeture pouvant être actionné électriquement.

12. Système suivant l'une des revendications précédentes, caractérisé par le fait que le laser supplémentaire (12) est une diode laser.

13. Procédé de contrôle optique de la section de transmission d'un premier faisceau (10) émis par un premier laser (2), présentant les caractéristiques suivantes :
a) dans la section de transmission du premier faisceau (10) on injecte un second faisceau (13) de telle sorte que les premier et second faisceaux (10, 13) se superposent dans la direction de propagation,
b) la longueur d'onde du second faisceau (13) diffère de la longueur d'onde du premier faisceau (10),
c) le second faisceau (23) est réfléchi, d'une manière sélective vis-à-vis des longueurs d'onde, à l'extrémité de la section de transmission,
d) le faisceau réfléchi (17) est découplé de la section de transmission,
e) l'intensité du faisceau découplé (17) est mesurée, et
f) la section de transmission est libérée ou interrompue pour le premier faisceau (10), en fonction du résultat de cette mesure.

14. Procédé suivant la revendication 13, caractérisé par le fait que dans le cas d'un premier faisceau (10) pulsé, l'intensité du faisceau découplé (17) est mesurée pendant une pause entre deux impulsions successives du premier faisceau (10).
